# EUROPEAN PATENT APPLICATION

(11) **EP 4 080 845 A1**
(43) Date of publication of application: **26.10.2022**
(21) Application number: 20916224.7
(22) Date of filing: 22.01.2020
(51) Int. Cl.: H04L 29/06

(54) **PCIE-BASED DATA TRANSMISSION METHOD AND APPARATUS**

(71) Applicant: Huawei Technologies Co., Ltd., Shenzhen, Guangdong 518129 (CN)
(72) Inventor: WAN, Lei, Shenzhen, Guangdong 518129 (CN); BAO, Pengxin, Shenzhen, Guangdong 518129 (CN)
(74) Representative: Pfenning, Meinig & Partner mbB
(86) International application number: PCT/CN2020/073927
(87) International publication number: WO 2021/147052

(57) **Abstract**

A PCIe-based data transmission method and an apparatus are provided, and are related to the field of communication technologies. The method includes the following: A first node obtains and sends a first TLP; and a switch receives the first TLP, and sends a second TLP to a second node. The first TLP includes a first TLP header and a first data payload, the second TLP includes a second TLP header and the first data payload, the first TLP header and the second TLP header are used to indicate a data type of the first data payload, and the data type of the first data payload includes at least one of audio, an image, control, data stream write, or security. The second node obtains the first data payload based on the data type of the first data payload. In this technical solution, the first node and the second node may communicate with each other without using a root in a PCIe system. In addition, communication between the first node and the second node may require only a PCIe interface, and does not require information conversion between different interfaces. This helps reduce communication complexity in a high-speed communication scenario.

## Description

### TECHNICAL FIELD

This application relates to the field of communication technologies, and in particular, to a peripheral component interconnect express (peripheral component interconnect express, PCIe)-based data transmission method and an apparatus.

### BACKGROUND

A PCIe system mainly includes a root (root), a switch (switch), and an endpoint (endpoint). A root is responsible for managing all buses and nodes in the PCIe system, and is a bridge for communication between a central processing unit (central processing unit, CPU) and an endpoint. A switch is a data forwarding node that connects an endpoint to another node (such as a root, another switch, or another endpoint) in the PCIe system. A communication interface between different nodes in the PCIe system is a PCIe interface. The PCIe interface is a high-speed short-distance communication interface, and can quickly and directly read and write a memory, to provide high-bandwidth communication. However, in the current technology, different endpoints in the PCIe system can communicate only through a root. Therefore, a great limitation exists.

### SUMMARY

This application provides a PCIe-based data transmission method and an apparatus, so that different nodes in a PCIe system may directly communicate with each other without using a root, and flexibility of communication between the different nodes in the PCIe system is improved.

According to a first aspect, an embodiment of this application provides a PCIe-based data transmission method, where the method specifically includes the following:

A first node obtains a first transaction layer packet (transaction layer packet, TLP), and sends the first TLP; a switch receives the first TLP, and sends a second TLP to a second node, where the first TLP and the second TLP may be the same, or may be different; the first TLP includes a first TLP header and a first data payload, the first TLP header is used to indicate a data type of the first data payload, the second TLP includes a second TLP header and the first data payload, and the second TLP header is used to indicate the data type of the first data payload; and after receiving the second TLP, the second node obtains the first data payload based on the data type of the first data payload.

In this embodiment of this application, because the first TLP header in the first TLP may be used to indicate the data type of the first data payload, the first node and the second node may communicate with each other without using a root in a PCIe system. In this way, flexibility of communication between different nodes in the PCIe system is improved, and this embodiment may be better applied in different scenarios (for example, an intra-vehicle network).

In a possible design, the data type of the first data payload includes one or more of audio, an image, control, data stream write SWRITE, or security.

In a possible design, the first TLP header is further used to indicate an attribute corresponding to the data type of the first data payload. This helps obtain the attribute corresponding to the data type of the first data payload.

In a possible design, a first field in the first TLP header is used to indicate the data type of the first data payload, a second field in the first TLP header is used to indicate the attribute corresponding to the data type of the first data payload, and the first field is different from the second field. The design is easy to implement.

In a possible design, the first field includes the first three bits of the first TLP header, and the second field includes at least one of the fourth bit to the eighth bit, the ninth bit, the 13^{th} bit, or M bits from the 33^{rd} bit to the last bit that are of the first TLP header; or
the first field includes the first eight bits of the first TLP header, and the second field includes at least one of the ninth bit, the 13^{th} bit, or M bits from the 33^{rd} bit to the last bit that are of the first TLP header; or
the first field includes the first nine bits of the first TLP header, and the second field includes at least one of the 13^{th} bit and M bits from the 33^{rd} bit to the last bit that are of the first TLP header; and
M is a positive integer greater than or equal to 1. The foregoing technical solution helps reduce impact of the data type of the first data payload and the attribute corresponding to the data type of the first data payload on information indicated by another field in the first TLP header.

In a possible design, the first field of the first TLP header is used to indicate the data type of the first data payload and the attribute corresponding to the data type of the first data payload, where
the first field includes at least one of the first eight bits, the ninth bit, the 13^{th} bit, or M bits from the 33^{rd} bit to the last bit that are of the first TLP header. The design is easy to implement.

In a possible design, the first three bits of the first TLP header indicate reserved bit values of a format (format, Fmt) field. This helps obtain information indicated by the Fmt field different from the TLP.

According to a second aspect, an embodiment of this application provides a communication apparatus, and the communication apparatus includes a processing module and a communication module.

The processing module is configured to obtain a first TLP. The communication module is configured to send the first TLP. The first TLP includes a first TLP header and a first data payload, and the first TLP header is used to indicate a data type of the first data payload.

In a possible design, the data type of the first data payload includes one or more of audio, an image, control, data stream write SWRITE, or security.

According to a third aspect, an embodiment of this application provides another communication apparatus, and the communication apparatus includes a processing module and a communication module. The communication module is configured to receive a first TLP from a first node, where the first TLP includes a first TLP header and a first data payload. The processing module is configured to identify whether the first TLP header is used to indicate a data type of the first data payload, and if the first TLP header is used to indicate the data type of the first data payload, the processing module triggers the communication module to send a second TLP to a second node, where the second TLP includes a second TLP header and the first data payload, and the second TLP header is used to indicate the data type of the first data payload. The communication module is further configured to send the second TLP to the second node.

In a possible design, the data type of the first data payload includes one or more of audio, an image, control, data stream write SWRITE, or security.

In a possible design, that the second TLP includes the first data payload may be understood as follows: Content of a data payload included in the second TLP is the same as content of the first data payload included in the first TLP.

According to a fourth aspect, an embodiment of this application provides another communication apparatus, and the communication apparatus includes a processing module and a communication module. The communication module is configured to receive a first TLP. The first TLP includes a first TLP header and a first data payload, and the first TLP header is used to indicate a data type of the first data payload. The processing module is configured to obtain the first data payload based on the data type of the first data payload.

In a possible design, the data type of the first data payload includes one or more of audio, an image, control, data stream write SWRITE, or security.

In a possible design, that the second TLP includes the first data payload may be understood as follows: Content of a data payload included in the second TLP is the same as content of the first data payload included in the first TLP.

It should be noted that, in the communication apparatus described in the second aspect to the fourth aspect, for related descriptions that the first TLP header is used to indicate the data type of the first data payload or the attribute corresponding to the data type of the first data payload, refer to the related descriptions in the first aspect. Details are not described herein again.

According to a fifth aspect, an embodiment of this application further provides a computer-readable storage medium, including instructions. When the instructions are run on a computer, the computer is enabled to perform the steps performed by the first node and/or the second node, or the steps performed by the switch according to the first aspect and any possible design of the first aspect.

According to a sixth aspect, an embodiment of this application further provides a chip. The chip includes a processor, and may further include a communication interface, and/or a memory, to implement the steps performed by the first node and/or the second node, or the steps performed by the switch according to the first aspect and any possible design of the first aspect.

According to a seventh aspect, an embodiment of this application further provides a computer program product, including instructions. When the computer program product is run on a computer, the computer is enabled to perform the steps performed by the first node and/or the second node, or the steps performed by the switch according to the first aspect and any possible design of the first aspect.

According to an eighth aspect, an embodiment of this application further provides a communication system, including a first node, a second node, and a switch. For details about the first node, refer to the related descriptions in the second aspect. For details about the switch, refer to the related descriptions in the third aspect. For details about the second node, refer to the related descriptions in the fourth aspect. Details are not described herein again.

According to a ninth aspect, an embodiment of this application provides another communication apparatus, including a processor, where the processor is coupled to a memory, the memory is configured to store instructions, and the processor is configured to execute the instructions to implement the steps performed by the first node and/or the second node or the steps performed by the switch according to the first aspect and any possible design of the first aspect.

In addition, for technical effects brought by any possible design of the second aspect to the ninth aspect, refer to the technical effects brought by different designs in the method part. Details are not described herein again.

### BRIEF DESCRIPTION OF DRAWINGS

FIG. 1 is a schematic diagram of a structure of a TLP according to an embodiment of this application;
FIG. 2 is a schematic diagram of a structure of a TLP header according to an embodiment of this application;
FIG. 3 is a schematic diagram of a structure of another TLP header according to an embodiment of this application;
FIG. 4 is a schematic diagram of a structure of another TLP header according to an embodiment of this application;
FIG. 5 is a schematic diagram of a structure of another TLP header according to an embodiment of this application;
FIG. 6 is a schematic diagram of a structure of another TLP header according to an embodiment of this application;
FIG. 7 is a schematic diagram of a structure of another TLP header according to an embodiment of this application;
FIG. 8 is a schematic diagram of a topology structure of a PCIe system according to an embodiment of this application;
FIG. 9 is a flowchart of a PCIe-based data transmission method according to an embodiment of this application;
FIG. 10 is a schematic diagram of a net topology structure of another PCIe system according to an embodiment of this application;
FIG. 11 is a flowchart of another PCIe-based data transmission method according to an embodiment of this application;
FIG. 12 is a schematic diagram of a structure of a communication apparatus according to an embodiment of this application; and
FIG. 13 is a schematic diagram of a structure of another communication apparatus according to an embodiment of this application.

### DESCRIPTION OF EMBODIMENTS

It should be understood that in this application, "/" means "or" unless otherwise specified. For example, A/B may represent A or B. The term "and/or" describes only an association relationship for describing associated objects, and represents that three relationships may exist. For example, A and/or B may represent the following three cases: Only A exists, both A and B exist, and only B exists. In addition, in this application, "a plurality of" means two or more than two. For example, at least one of a, b, or c may represent the following seven cases: a, b, and c; a and b; a and c; b and c; a; b; or c.

In this application, "example", "in some embodiments", "in some other embodiments", or the like is used to represent giving an example, an illustration, or a description. Any embodiment or design scheme described as an "example" in this application should not be explained as being more preferred or having more advantages than another embodiment or design scheme. Exactly, the word "example" is used to present a concept in a specific manner.

It should be noted that terms such as "first" and "second" in this application are merely used for distinguishing and description, and cannot be understood as an indication or implication of relative importance or an indication or implication of an order.

Generally, a PCIe system mainly includes an endpoint (endpoint), a switch (switch), and a root (root complex, which may be referred to as root for short). A communication interface between different nodes in the PCIe system is a PCIe interface. The PCIe interface is a high-speed short-distance communication interface, and can quickly and directly read and write a memory, to implement high-bandwidth communication. For example, a communication interface between an endpoint and a switch, a communication interface between switches, a communication interface between a switch and a root, and a communication interface between an endpoint and a root are all PCIe interfaces.

A data packet transmitted between different nodes in the PCIe system may be referred to as a transaction layer packet (transaction layer packet, TLP). The TLP may include a TLP header (TLP header) and a data payload (data payload). A length of the TLP header may be 12 bytes, 16 bytes, or the like, and is related to a quantity of bits of a maximum binary number that can be processed by a central processing unit (central processing unit, CPU) connected to the root at a time. For example, if the quantity of bits of the maximum binary number that can be processed by the CPU at a time is 32, the length of the TLP header may be 12 bytes. For another example, if the quantity of bits of the maximum binary number that can be processed by the CPU at a time is 64, the length of the TLP header may be 16 bytes. A length of the data payload is related to actual data to be sent, an encoding scheme, and the like. In some embodiments, the length of the data payload is less than or equal to a threshold (for example, 4096 bytes, where the threshold may be predefined (for example, an empirical value), or may be determined based on an algorithm or a policy, and this is not limited), to reduce impact of an excessively heavy data payload on a TLP transmission rate. A minimum length of the data payload may be 0.

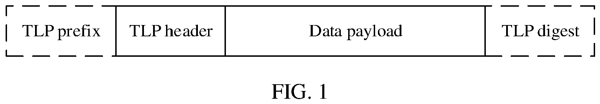

In some other embodiments, the TLP may further include a TLP prefix (prefix) field and/or a TLP digest (digest) field. For example, the TLP digest field may be used to indicate an end-to-end cyclic redundancy check (end-to-end cyclic redundancy check, ECRC) code for checking whether a data packet is correct. For example, a length of an ECRC may be 4 bytes. For example, a structure of a TLP may be shown in FIG. 1. A TLP prefix field is located before a TLP header. The TLP header is located before a data payload, and the data payload is located before a TLP digest field.

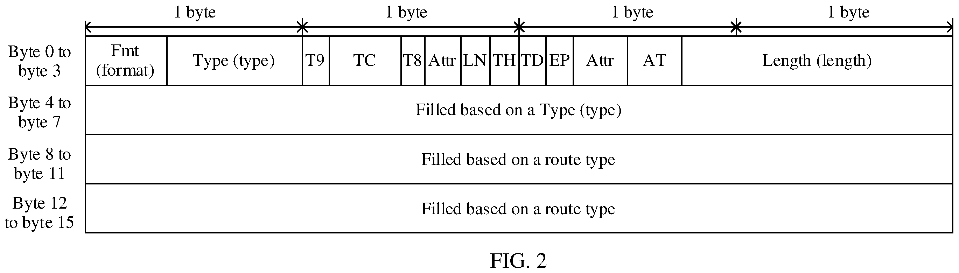

However, an existing TLP header does not support an indication of a data type (for example, audio or an image) of a data payload. 16 bytes are used as an example. A structure of an existing TLP header may be shown in FIG. 2. The TLP header includes a format (format, Fmt) field, a type (Type) field, a traffic class (traffic class, TC) field, an attribute (attributes, Attr) field, a lightweight notification (light weight notification, LN) field, a TLP processing hints (TLP processing hints, TH) field, a TLP digest (TLP digest, TD) field, a poisoned data (poisoned data, EP) field, an address type (address type, AT) field, a length (Length) field, and the like.

The Fmt field includes the first three bits of the TLP header, and is used to indicate a length of the TLP header and whether the TLP includes a data payload, or is used to indicate a TLP prefix (TLP prefix). Specifically, the Fmt field may be 000, 001, 010, 011, or 100, which are respectively used for different indications. For example, when the Fmt field is 100, the Fmt field indicates the TLP prefix. 101, 110, and 111 are reserved bit values of the Fmt field.

The Type field includes the fourth bit to the eighth bit that are of the TLP header, and has a total of five bits. The Type field is used to indicate a PCIe service type. There are 19 PCIe service types in an existing PCIe system, and the 19 PCIe service types may be classified into six types: Memory read/write, input/output (input/output, I/O) read/write, Configuration read/write, a Message request, Completion, and an atomic operation. Therefore, the Type field has 13 reserved bit values.

T9 and T8 are reserved bits, where T9 is the ninth bit of the TLP header, and T8 is the 13^{th} bit of the TLP header.

The TC field includes the 10^{th} bit to the 12^{th} bit that are of the TLP header, and is used to indicate a scheduling priority. For example, if TLPs that have different scheduling priorities indicated by two TC fields arrive at a switch simultaneously, the switch preferably forwards a TLP that has a higher scheduling priority indicated by the TC field.

The Attr field includes the 14^{th}, 19^{th}, and 20^{th} bits that are of the TLP header, and is used to indicate a TLP attribute. The TLP attribute is used to indicate TLP processing, to distinguish from default processing. For example, for ordering (ordering) or hardware coherency management (Hardware coherency management (snoop)), refer to related descriptions in the PCIe protocol 5.0. Details are not described herein again.

The LN field is the 15^{th} bit of the TLP header, and is used to indicate a simple read/write manner.

The TH field is the 16^{th} bit of the TLP header, and is used to indicate whether a tail of the TLP header has a processing hint (processing hints, PH).

The TD field is the 17^{th} bit of the TLP header, and is used to indicate whether a TLP tail includes a TLP digest.

The EP field is the 18^{th} bit of the TLP header, and is used to indicate poisoned data.

The AT field includes the 21^{st} and the 22^{nd} bits, and is used to indicate whether an address needs to be translated.

The Length field includes the 23^{rd} to the 32^{nd} bits, and has a total of 10 bits. The Length field is used to indicate a length of a data payload.

It should be noted that the foregoing described fields occupy the first four bytes of the TLP header, that is, byte 0 to byte 3. However, generally, the fifth byte to the eighth byte of the TLP header, that is, byte 4 to byte 7, are filled based on the Type field, and the last eight bytes of the TLP header, that is, byte 8 to byte 15, are filled based on a route type. For example, byte 8 to byte 11 are filled with a transmitting address, and byte 12 to byte 15 are filled with a receiving address. For another example, byte 8 and byte 9 are filled with a transmitting identifier, and byte 10 and byte 11 are filled with a receiving identifier.

If different endpoints directly communicate with each other, because the existing TLP header does not support an indication of a data type of a data payload, an endpoint at a receive end cannot identify a TLP from an endpoint at a transmit end. Therefore, in the existing PCIe system, different endpoints cannot directly communicate with each other, and need to communicate with each other through a root. Therefore, a great limitation exists.

In view of this, embodiments of this application provide a PCIe-based data transmission method. A TLP structure is changed, so that a TLP header may be used to indicate a data type of a data payload in the TLP. In this way, a receive endpoint and a transmit endpoint may communicate with each other without using a root, and flexibility of communication between different nodes is improved. In addition, because the TLP header may indicate the data type of a data payload, communication between the receive endpoint and the transmit endpoint may only relate to a PCIe interface, and may further be better applied to different scenarios (for example, an intra-vehicle network).

The following explains some terms in embodiments of this application, to facilitate understanding of a person skilled in the art.
1. First node: The first node in embodiments of this application is a transmit endpoint, and may be a switch in a PCIe system, or may be an endpoint in the PCIe system.
2. Second node: The second node in embodiments of this application is a receive endpoint, and may be a switch in the PCIe system, or may be an endpoint in the PCIe system.
   It should be noted that the first node and the second node may be in a same PCIe system. For example, both the first node and the second node are endpoints. When the first node and the second node are in the same PCIe system, the first node and the second node may be connected to a same switch, or may be connected to different switches. In addition, the first node and the second node may alternatively be in different PCIe systems. Generally, different PCIe systems are connected by a non-transparent bridge (non-transparent bridge, NTB). When the first node and the second node are in different PCIe systems, to implement normal communication between the first node and the second node, routing information, for example, an address or an identifier of a receive endpoint, needs to be converted through bridging.
3. TLP: In embodiments of this application, the TLP is a data packet transmitted between different nodes in the PCIe system, and includes a TLP header and a data payload. In some embodiments, the TLP may further include a TLP prefix (prefix) field and/or a TLP digest (digest) field. For example, a TLP structure may be shown in FIG. 1.
4. Data type of a data payload: The data type of the data payload in embodiments of this application may include one or more of audio, an image, control, data stream write (stream write, SWRITE), security, or the like. For example, the data type of the data payload may be audio. For another example, the data type of the data payload may alternatively be audio and an image. For another example, the data type of the data payload may alternatively be an image and security. It should be noted that the foregoing is merely an example of the data type of the data payload, and does not constitute a limitation on the data type of the data payload. The data type of the data payload in embodiments of this application may be another type other than the six types that include Memory read/write, input/output (input/output, I/O) read/write, Configuration read/write, a Message request, Completion, and an atomic operation.

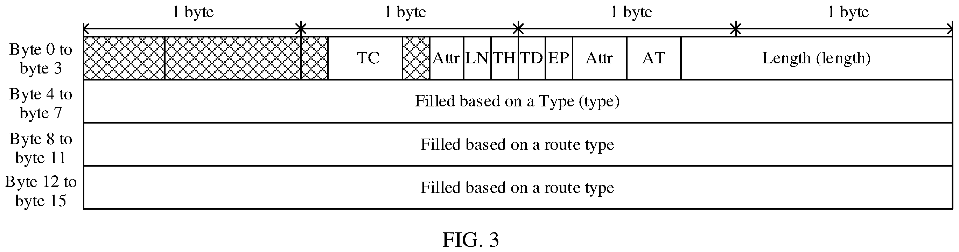

In embodiments of this application, the data type of the data payload may be indicated by using the TLP header. For example, a field 1 in the TLP header is used to indicate the data type of the data payload. For example, the field 1 may be one or more bits in shadow parts in the TLP header shown in FIG. 3. For example, the field 1 includes one or more of first three bits, the fourth bit to the eighth bit, the ninth bit, or the 13^{th} bit in the TLP header. In some embodiments, when the field 1 includes the first three bits of the TLP header, the first three bits of the TLP header are reserved bit values of the Fmt field, for example, 101, 110, or 111. This helps distinguish from information indicated by the Fmt field. In some embodiments, when the field 1 includes the fourth bit to the eighth bit of the TLP header, the fourth bit to the eighth bit of the TLP header are reserved bit values of the Type field. For example, the field 1 includes the first eight bits of the TLP header. When the first three bits of the TLP header are the reserved bit values of the Fmt field, the fourth bit to the eighth bit of the TLP header may not be the reserved bit values of the Type field, or may be the reserved bit values of the Type field. This is not limited herein.

It should be noted that, for another field other than the field 1, reference may be made to FIG. 2, or other information may be indicated based on a requirement. This is not limited in embodiments of this application.

5. Attribute corresponding to the data type of the data payload: In embodiments of this application, the attribute corresponding to the data type of the data payload is used by the receive endpoint to parse the data payload. If data types of data payloads are different, attributes corresponding to the data types of the data payloads may be the same or may be different.

For example, if the data type of the data payload is audio, an attribute corresponding to the audio may include a sampling quantization format, a sampling frequency, a quantization depth, a quantity of sound channels/channels, and the like. A sampling quantization format may be floating-point quantization, integer quantization, or the like; a sampling frequency may be 24 KHz, 48 KHz, or the like; and a quantization depth may indicate a quantity of bits encoded in each sample, for example, 8 bits or 12 bits. The quantity of sound channels is a quantity of sound channels occupied by the data payload of the TLP. The quantity of channels is a quantity of channels occupied by the data payload of the TLP.

For another example, if the data type of the data payload is an image, an attribute corresponding to the image may include an image data type, a pixel quantization depth, image resolution, segmentation indication information, and the like. The image data type may be RAW, RGB, YUV, embedded data, or the like. The pixel quantization depth is used to indicate a quantity of bits (or a quantity of bits) for quantization of a pixel (pixel), for example, 12 bits, 20 bits, or 24 bits. The image resolution may be 1080P, 2K, 4K, or the like. The segmentation indication information is used to indicate a location, in a row of images, of an image indicated by the data payload in the TLP. For example, a row of images may be understood as a row of images in a frame of image collected by an image sensor (for example, a camera). When image resolution is high, a row of images may need to be divided into a plurality of TLP packets for transmission.

For another example, the data type of the data payload is control. The control may be understood as control-type information, and an attribute corresponding to the control may include a control information type and a control information quantity. The control information type may include one or more of an inter-integrated circuit (inter-integrated circuit, I2C), a general-purpose input/output (general-purpose input/output, GPIO), a serial peripheral interface (serial peripheral interface, SPI), or the like. The control information quantity refers to control information data corresponding to the control information type. For example, if the attribute corresponding to the control includes a control information type I2C, the control information quantity refers to a quantity of channels of I2C-type information in the data payload. For example, if the control information quantity is three, the data payload includes three channels of I2C-type information. For another example, if the attribute corresponding to the control include a control information type I2C and a control information type GPIO, the control information quantity refers to a quantity of channels of I2C-type information and GPIO-type information that are in the data payload. For example, the data payload includes three channels of I2C-type information and eight channels of GPIO-type information.

For another example, if the data type of the data payload is security, an attribute corresponding to the security may include a message type, a format indicator, an encryption indicator, or the like. The message type is a type of a TLP exchanged in a security establishment process, for example, a security establishment request or a security establishment completion response. The format indicator is used to indicate a meaning identified by each bit in the TLP. The encryption indicator is used to indicate whether the TLP is encrypted.

For another example, if the data type of the data payload is SWRITE, an attribute corresponding to the SWRITE may include an alignment manner. The alignment manner is used to indicate a minimum unit for alignment. For example, four bytes are used as the minimum unit for alignment. For another example, 8 bytes are used as the minimum unit for alignment. For example, that four bytes are used as the minimum unit for alignment may be understood as reading data by using 4 bytes as a unit.

The foregoing is merely an example for describing the attribute corresponding to the data type of the data payload, and does not constitute a limitation on the attribute corresponding to the data type of the data payload. In embodiments of this application, it makes sense if the receive end can parse the data payload based on the attribute corresponding to the data type of the data payload.

In embodiments of this application, the attribute corresponding to the data type of the data payload may be predefined by using a protocol, or may be obtained by the second node from a server based on the data type of the data payload, or may be indicated by using the TLP header. In embodiments of this application, a manner in which the second node obtains the attribute corresponding to the data type of the data payload is not limited.

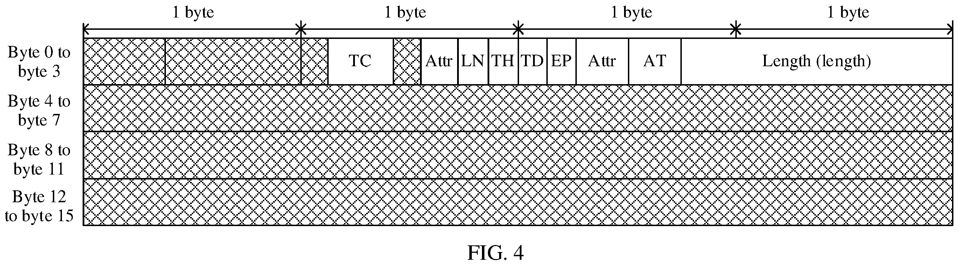

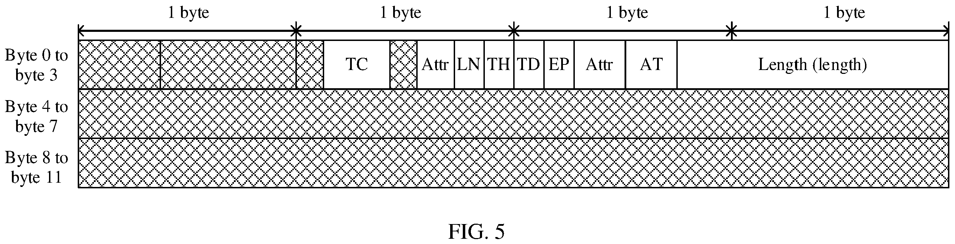

When the attribute corresponding to the data type of the data payload is indicated by using the TLP header, the data type of the data payload and the attribute corresponding to the data type of the data payload may be indicated by using a field 2 in the TLP header. For example, a TLP header includes 16 bytes. In this case, the field 2 may include one or more bits in shadow parts in the TLP header shown in FIG. 4. For another example, a TLP header includes 12 bytes. In this case, the field 2 may include one or more bits in shadow parts in the TLP header shown in FIG. 5. For example, the field 2 includes one or more of the first three bits, the fourth bit to the eighth bit, the ninth bit, the 13^{th} bit, or M bits from the 33^{rd} bit to the last bit that are of the TLP header. M is a positive integer greater than or equal to 1. In some embodiments, when the field 2 includes the first three bits of the TLP header, the first three bits of the TLP header are reserved bit values of the Fmt field, for example, 101, 110, or 111. This helps distinguish from information indicated by the Fmt field. In some embodiments, when the field 2 includes the fourth bit to the eighth bit of the TLP header, the fourth bit to the eighth bit of the TLP header are reserved bit values of the Type field. For example, the field 1 includes the first eight bits of the TLP header. When the first three bits of the TLP header are the reserved bit values of the Fmt field, the fourth bit to the eighth bit of the TLP header may not be the reserved bit values of the Type field, or may be the reserved bit values of the Type field. This is not limited herein.

It should be noted that the data type of the data payload and the attribute corresponding to the data type of the data payload may be both indicated by using a bit value of the field 2. For example, the field 2 includes the first three bits of the TLP header. For example, if the field 2 is 101, the field 2 is used to indicate that the data type of the data payload includes audio and an image, and the field 2 further indicates attributes respectively corresponding to the audio and the image. For another example, if the field 2 is 110, the field 2 is used to indicate that the data type of the data payload includes control, and the field 2 further indicates an attribute corresponding to the control.

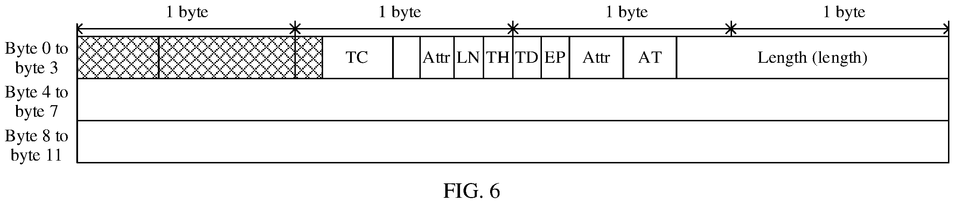

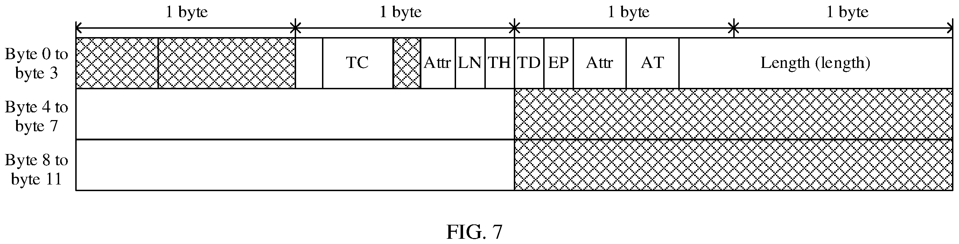

In addition, the data type of the data payload and the attribute corresponding to the data type of the data payload may alternatively be indicated by using different bits in the field 2. For example, the field 2 includes the first nine bits of the TLP header. The first three bits of the TLP header are used to indicate the data type of the data payload, and the fourth to the ninth bits of the TLP header are used to indicate the attribute corresponding to the data type of the data payload. The attribute corresponding to the data type of the data payload may be indicated in a unified manner by using the fourth to the ninth bits of the TLP header. Alternatively, different bits in the fourth bit to the ninth bit of the TLP header may be respectively used to indicate different content in the attribute corresponding to the data type of the data payload. For example, the data type of the data payload is security, and the TLP header includes 12 bytes. As shown in FIG. 6, the field 2 is represented by shadow parts in a TLP header, where the first three bits of the TLP header are used to indicate that a data type of a data payload is security, the fourth bit to the eighth bit of the TLP header are used to indicate a message type, and the ninth bit of the TLP header is an encryption indicator. As shown in FIG. 7, a TLP header includes 12 bytes, and the field 2 is represented by shadow parts in the TLP header. The field 2 includes the first eight bits, the 13^{th} bit, the 49^{th} bit to the 64^{th} bit, and the 81^{st} bit to the 96^{th} bit of the TLP header. For example, the first eight bits and the 13^{th} bit of the TLP header are used to indicate a data type of a data payload, and the 49^{th} bit to the 64^{th} bit and the 81^{st} bit to the 96^{th} bit of the TLP header are used to indicate an attribute corresponding to the data type of the data payload. Further, different bits in the 49^{th} to the 64^{th} bits and the 81^{st} to the 96^{th} bits of the TLP header may be respectively used to indicate different content in the attribute corresponding to the data type of the data payload. For example, the data type of the data payload is an image. For example, the 49^{th} to the 64^{th} bits of the TLP header are used to indicate a data type of the image, and the 81^{st} to the 96^{th} bits of the TLP header are used to indicate a pixel quantization depth. For another example, the 49^{th} to 64^{th} bits of the TLP header are used to indicate the data type of the image and image resolution, and the 81^{st} to the 96^{th} bits of the TLP header are used to indicate the pixel quantization depth and a segmentation indicator.

It should be noted that, for another field other than the field 2, reference may be made to FIG. 2, or other information may be indicated based on a requirement. This is not limited in embodiments of this application.

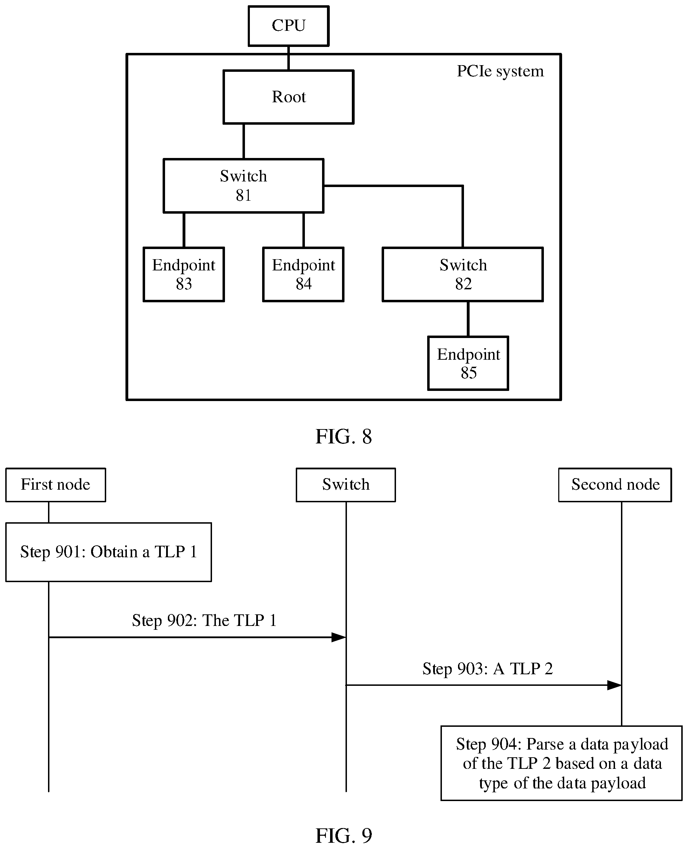

A topology structure of the PCIe system in embodiments of this application may be of a tree structure, a ring structure, or another structure. This is not limited in embodiments of this application. For example, FIG. 8 shows a schematic diagram of a topology structure of a tree-structure PCIe system. A CPU is configured to manage or control the PCIe system. A communication interface between the CPU and a root is not a PCIe interface.

In a PCIe system, one switch may be connected to one or more endpoints, or may be connected to one or more other switches. For example, as shown in FIG. 8, a switch 81 is connected to an endpoint 83, an endpoint 84, and a switch 82, and is connected to an endpoint 85 through the switch 82.

An endpoint may alternatively be referred to as a peripheral (peripheral) or an end device. For example, the endpoint may be a microphone, a speaker, a display, a camera, a keyboard, a mouse, a sensor, or the like, and may be a component on a same device, or may be components on different devices that are connected together in a wired or wireless manner.

This embodiment of this application may be applied to an intra-vehicle network scenario, or may be applied to a device, such as a mobile phone, that supports a PCIe interface. This is not limited herein.

Example 1: A first node and a second node are located in a same PCIe system. An example in which the first node and the second node are located in the PCIe system shown in FIG. 8 is used to describe the PCIe-based data transmission method according to an embodiment of this application.

FIG. 9 is a flowchart of a PCIe-based data transmission method according to an embodiment of this application. The method specifically includes the following steps.

Step 901: The first node obtains a TLP 1. The TLP 1 includes a TLP header 1 and a data payload 1. The TLP header 1 is used to indicate a data type of the data payload 1.

For example, the TLP header 1 is further used to indicate an attribute corresponding to the data type of the data payload. For a specific manner in which the TLP header 1 indicates the data type of the data payload 1 and the attribute corresponding to the data type of the data payload, refer to the foregoing related description. Details are not described herein again.

For example, the TLP 1 may be generated by the first node, or may be sent by another node to the first node. This is not limited herein. For example, if the first node is an endpoint, the TLP 1 may be generated by the endpoint. For another example, if the first node is a switch, the TLP 1 may be sent by another node (for example, an endpoint or a switch) to the first node.

Step 902: The first node sends the TLP 1.

Step 903: A switch receives the TLP 1, and sends a TLP 2 to the second node. The TLP 2 includes a TLP header 2 and the data payload 1. The TLP header 2 is used to indicate the data type of the data payload 1.

Specifically, after receiving the TLP 1, the switch identifies whether the TLP 1 header is used to indicate the data type of the data payload. When the TLP header indicates the data type of the data payload, the switch sends the TLP 2 to the second node. The TLP 2 and the TLP 1 have the same data payload 1. The TLP header 2 is also used to indicate the data type of the data payload, and the TLP header 2 may be the same as or different from the TLP header 1. In other words, the switch may modify, delete, or add corresponding indication information based on the TLP header 1. For example, the switch may modify routing information in the TLP header 1.

It should be noted that a location, relative to the TLP header 1, of a field that is in the TLP header 1 and that is used to indicate the data type of the data payload is the same as a location, relative to the TLP header 2, of a field that is in the TLP header 2 and that is used to indicate the data type of the data payload, to facilitate obtaining or parsing performed by another node (for example, the second node). For example, the first three bits of the TLP header 1 are used to indicate the data type of the data payload, the first three bits of the TLP header 2 are also used to indicate the data type of the data payload, and the first three bits of the TLP header 1 are the same as the first three bits of the TLP header 2. Similarly, when the TLP header 1 is further used to indicate the attribute corresponding to the data type of the data payload, the TLP header 2 is also further used to indicate the attribute corresponding to the data type of the data payload. In addition, a location, relative to the TLP header 1, of a field that is in the TLP header 1 and that is used to indicate the attribute corresponding to the data type of the data payload is the same as a location, relative to the TLP header 2, of a field that is in the TLP header 2 and that is used to indicate the attribute corresponding to the data type of the data payload.

The switch may be connected to the first node, or may be connected to the first node through another switch. The switch may be connected to the second node, or may be connected to the second node through another switch.

For example, the first node is the endpoint 83 shown in FIG. 8 and the second node is the endpoint 85. The endpoint 85 sends the TLP 1 to the switch 81, and if the switch 81 identifies that the TLP header 1 in the TLP 1 is used to indicate the data type of the data payload, the switch 81 forwards the TLP 1 to the switch 82 based on the routing information in the TLP header 1. After receiving the TLP 1, the switch 82 identifies that the TLP header 1 is used to indicate the data type of the data payload, and forwards the TLP 1 to the endpoint 85 based on the routing information in the TLP header 1.

For another example, the first node is the endpoint 83 shown in FIG. 8 and the second node is the endpoint 84. The endpoint 85 sends the TLP 1 to the switch 81, and if the switch 81 identifies that the TLP header 1 in the TLP 1 is used to indicate the data type of the data payload, the switch 81 forwards the TLP 1 to the endpoint 84 based on the routing information in the TLP header 1.

Step 904: The second node receives the TLP 2, and obtains the data payload 1 based on the data type of the data payload 1.

Specifically, when receiving the TLP 2, the second node obtains the data payload 1 based on the data type of the data payload 1 and the attribute corresponding to the data type of the data payload 1.

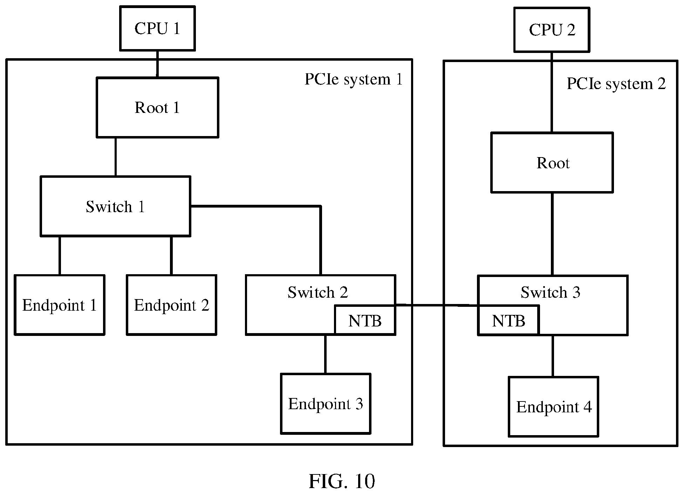

Example 2: The first node and the second node are located in different PCIe systems. For example, as shown in FIG. 10, the first node is located in a PCIe system 1, and the second node is located in a PCIe system 2, where a switch 2 in the PCIe system 1 and a switch 3 in the PCIe system 2 are connected through an NTB module. It should be noted that, when the switch 2 is used as an example, the NTB module may be located in the switch 2, or may be connected to the switch 2 but is not located in the switch 2.

Different from the PCIe-based data transmission method that is shown in FIG. 9, after receiving the TLP 1, the switch further needs to perform bridging conversion on the routing information in the TLP 1, and then sends the TLP 2 to the second node. For example, the switch performs bridging conversion on the routing information in the TLP 1 by using the NTB module. For a specific implementation, refer to an existing bridging conversion manner. Details are not described herein again.

For example, the first node is an endpoint 3 in the PCIe system 1 in FIG. 10 and the second node is an endpoint 4 in the PCIe system in FIG. 10. The endpoint 3 sends the TLP 1 to the switch 2. When identifying that the TLP header 1 of the TLP 1 is used to indicate the data type of the data payload, the switch 2 performs bridging conversion on the routing information in the TLP header 1 by using the NTB module to obtain the TLP 2, and sends the TLP 2 to the switch 3. If the switch 3 identifies that the TLP 2 is used to indicate the data type of the data payload, the switch 3 forwards the TLP 2 to the endpoint 4.

For another example, the first node is an endpoint 2 in the PCIe system 1 in FIG. 10 and the second node is the endpoint 4 in the PCIe system 2 in FIG. 10. The endpoint 2 sends the TLP 1 to the switch 1. When identifying that the TLP header 1 of the TLP 1 is used to indicate the data type of the data payload, the switch 1 forwards the TLP 1 to the switch 2 based on the routing information in the TLP 1. When identifying that the TLP header 1 is used to indicate the data type of the data payload, the switch 2 performs bridging conversion on the routing information in the TLP header 1 by using the NTB module to obtain the TLP 2, and sends the TLP 2 to the switch 3. If the switch 3 identifies that the TLP 2 is used to indicate the data type of the data payload, the switch 3 forwards the TLP 2 to the endpoint 4.

For example, the first node is a camera, and the second node is a display. The camera and the display are located in a same PCIe system, and the camera and the display are connected through a same switch.

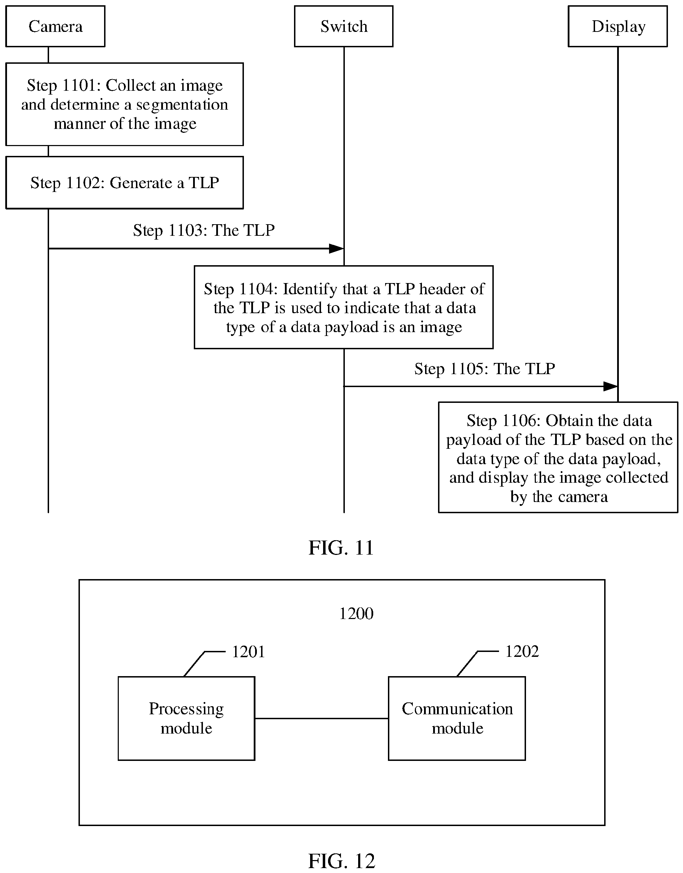

FIG. 11 shows a PCIe-based data transmission method according to an embodiment of this application. The method specifically includes the following steps.

Step 1101: After collecting a frame of image, the camera determines a data amount of each row of the frame of image based on a data type, resolution, and a pixel quantization depth that are of the image, and then determines, with reference to a maximum data amount that can be borne by a data payload of a TLP, a quantity of TLPs that need to be sent, to determine a segmentation manner of the frame of image.

Step 1102: The camera generates N TLPs based on the determined segmentation manner of the frame of image. Each TLP includes a TLP header and a data payload. Each TLP header is used to indicate that a data type of the data payload is an image, and each TLP header also indicates an attribute corresponding to the image.

Step 1103: The camera sends the TLP.

Step 1104: After receiving the TLP from the camera, the switch that connects the camera and the display determines whether the TLP header is used to indicate the data type of the data payload; and if the TLP header is used to indicate the data type of the data payload, step 1105 is performed; or if the TLP header does not indicate the data type of the data payload, the TLP is sent to a root.

Step 1105: The switch forwards the TLP to the display.

Step 1106: After receiving the TLP, the display obtains the data payload based on the data type of the data payload, and displays the image collected by the camera.

The foregoing is merely an example for description, and does not constitute a limitation on the method in this embodiment of this application.

The foregoing embodiments may be used separately, or may be used in combination to achieve different technical effects.

In the foregoing embodiments provided in this application, the PCIe-based data transmission method that is provided in embodiments of this application is described from perspectives of the first node, the switch, and the second node that are used as execution bodies. To implement functions in the PCIe-based data transmission method that is provided in the foregoing embodiments of this application, the first node, the switch, and the second node may include a hardware structure and/or a software module, and implement the functions in a form of the hardware structure, the software module, or a combination of the hardware structure and the software module. Whether a specific function in the foregoing functions is performed by the hardware structure, the software module, or the combination of the hardware structure and the software module depends on specific applications and design constraints of the technical solutions.

Same as the foregoing concept, as shown in FIG. 12, an embodiment of this application further provides a communication apparatus 1200. The communication apparatus 1200 includes a communication module 1202 and a processing module 1201.

In an example, the communication apparatus 1200 is configured to implement functions of the first node in the foregoing method. The communication apparatus 1200 may be an endpoint, or may be an apparatus in the endpoint. The communication apparatus may be a chip.

The processing module 1201 is configured to obtain a first TLP. The communication module 1202 is configured to send the first TLP. The first TLP includes a first TLP header and a first data payload. The first TLP header is used to indicate a data type of the first data payload.

In an example, the communication apparatus 1200 is configured to implement functions of the switch in the foregoing method. The apparatus may be the switch, or may be an apparatus in the switch. The apparatus may be a chip.

The communication module 1202 is configured to receive a first TLP from the first node. The first TLP includes a first TLP header and a first data payload. The processing module 1201 is configured to identify whether the first TLP header of the first TLP is used to indicate a data type of the first data payload; and if the first TLP header of the first TLP is used to indicate the data type of the first data payload, the processing module 1201 triggers the communication module 1202 to send a second TLP to the second node, where the second TLP includes a second TLP header and the first data payload, and the second TLP header is used to indicate the data type of the first data payload.

In an example, the communication apparatus 1200 is configured to implement functions of the second node in the foregoing method. The apparatus may be the second node, or may be an apparatus in the second node. The apparatus may be a chip.

The communication module 1202 is configured to receive a second TLP. The second TLP includes a second TLP header and a first data payload. The second TLP header is used to indicate a data type of the first data payload. The processing module 1201 is configured to obtain the first data payload based on the data type of the first data payload.

For specific execution processes of the processing module 1201 and the communication module 1202, refer to the descriptions in the foregoing method embodiment. Division into modules in embodiments of this application is an example, and is merely logical function division. During an actual implementation, there may be another division manner. In addition, functional modules in embodiments of this application may be integrated into one processor, or each of the modules may exist alone physically, or two or more modules are integrated into one module. The integrated module may be implemented in a form of hardware, or may be implemented in a form of a software function module.

It should be noted that, for the first TLP, reference may be made to the related implementation of the TLP 1 in the method, and for the second TLP, reference may be made to the related implementation of the TLP 2 in the method part. Details are not described herein again.

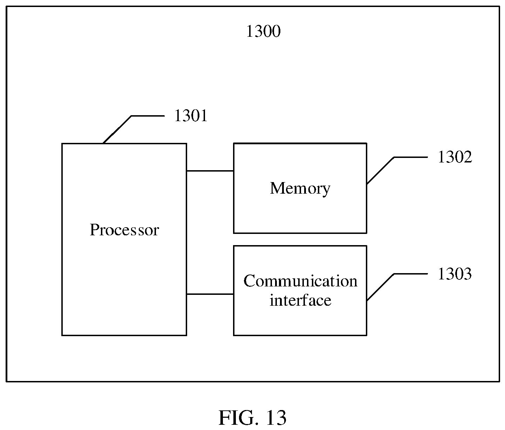

Same as the foregoing concept, as shown in FIG. 13, an embodiment of this application further provides a communication apparatus 1300.

In an example, the communication apparatus 1300 is configured to implement functions of the terminal device in the foregoing method. The communication apparatus 1300 may be the first node, or may be an apparatus in the first node. The communication apparatus 1300 includes at least one processor 1301, to implement functions of the first node in the foregoing method. For example, the processor 1301 may be configured to obtain the first TLP. For details, refer to the detailed descriptions in the method. Details are not described herein again.

In some embodiments, the communication apparatus 1300 may further include at least one memory 1302, to store program instructions and/or data. The memory 1302 is coupled to the processor 1301. Coupling in this embodiment of this application is indirect coupling or a communication connection between apparatuses, units, or modules, may be in an electrical form, a mechanical form, or another form, and is used for information exchange between apparatuses, units, or modules. In another implementation, the memory 1302 may alternatively be located outside the communication apparatus 1300. The processor 1301 may cooperate with the memory 1302. The processor 1301 may execute the program instructions stored in the memory 1302. At least one of the at least one memory may be included in the processor.

In some embodiments, the communication apparatus 1300 may further include a communication interface 1303, to communicate with another device through a transmission medium, so that an apparatus in the communication apparatus 1300 may communicate with another node. For example, the communication interface 1303 may be a transceiver, a circuit, a bus, a module, or another type of communication interface, and the another node may be the switch, the second node, or the like. The processor 1301 receives and sends information through the communication interface 1303, and is configured to implement the methods in the foregoing embodiments. For example, the communication interface 1303 may be configured to send the first TLP and the like.

In an example, the communication apparatus 1300 is configured to implement functions of the switch in the foregoing method. The communication apparatus 1300 may be the switch, or may be an apparatus in the switch. The communication apparatus 1300 includes at least one processor 1301, to implement functions of the switch in the foregoing method. For example, the processor 1301 may be configured to identify whether the first TLP header is used to indicate the data type of the first data payload. For details, refer to the detailed descriptions in the method. Details are not described herein again.

In some embodiments, the communication apparatus 1300 may further include at least one memory 1302, to store program instructions and/or data. The memory 1302 is coupled to the processor 1301. Coupling in this embodiment of this application is indirect coupling or a communication connection between apparatuses, units, or modules, may be in an electrical form, a mechanical form, or another form, and is used for information exchange between apparatuses, units, or modules. In another implementation, the memory 1302 may alternatively be located outside the communication apparatus 1300. The processor 1301 may cooperate with the memory 1302. The processor 1301 may execute the program instructions stored in the memory 1302. At least one of the at least one memory may be included in the processor.

In some embodiments, the communication apparatus 1300 may further include a communication interface 1303, to communicate with another device through a transmission medium, so that an apparatus in the communication apparatus 1300 may communicate with another node. For example, the communication interface 1303 may be a transceiver, a circuit, a bus, a module, or another type of communication interface, and the another node may be the first node, the second node, another switch, or the like. The processor 1301 receives and sends information through the communication interface 1303, and is configured to implement the methods in the foregoing embodiments. For example, the communication interface 1303 may receive the first TLP, send the second TLP, and the like.

In an example, the communication apparatus 1300 is configured to implement functions of the second node in the foregoing method. The communication apparatus 1300 may be the second node, or may be an apparatus in the second node. The communication apparatus 1300 includes at least one processor 1301, to implement functions of the switch in the foregoing method. For example, the processor 1301 may be configured to obtain the first data payload based on the data type of the first data payload. For details, refer to the detailed descriptions in the method. Details are not described herein again.

In some embodiments, the communication apparatus 1300 may further include at least one memory 1302, to store program instructions and/or data. The memory 1302 is coupled to the processor 1301. Coupling in this embodiment of this application is indirect coupling or a communication connection between apparatuses, units, or modules, may be in an electrical form, a mechanical form, or another form, and is used for information exchange between apparatuses, units, or modules. In another implementation, the memory 1302 may alternatively be located outside the communication apparatus 1300. The processor 1301 may cooperate with the memory 1302. The processor 1301 may execute the program instructions stored in the memory 1302. At least one of the at least one memory may be included in the processor.

In some embodiments, the communication apparatus 1300 may further include a communication interface 1303, to communicate with another device through a transmission medium, so that an apparatus in the communication apparatus 1300 may communicate with another node. For example, the communication interface 1303 may be a transceiver, a circuit, a bus, a module, or another type of communication interface, and the another node may be the first node, the switch, or the like. The processor 1301 receives and sends information through the communication interface 1303, and is configured to implement the methods in the foregoing embodiments. For example, the communication interface 1303 may receive the second TLP and the like.

It should be noted that, for the first TLP, reference may be made to the related implementation of the TLP 1 in the method, and for the second TLP, reference may be made to the related implementation of the TLP 2 in the method part. Details are not described herein again.

In this embodiment of this application, a connection medium between the communication interface 1303, the processor 1301, and the memory 1302 is not limited. For example, in this embodiment of this application, the memory 1302, the processor 1301, and the communication interface 1303 may be connected through a bus in FIG. 13. The bus may be classified into an address bus, a data bus, a control bus, and the like.

In this embodiment of this application, the processor may be a general purpose processor, a digital signal processor, an application-specific integrated circuit, a field programmable gate array or another programmable logic device, a discrete gate or a transistor logic device, or a discrete hardware component, so that the methods, steps, and logical block diagrams that are disclosed in embodiments of this application may be implemented or performed. The general purpose processor may be a microprocessor, any conventional processor, or the like. The steps of the methods disclosed with reference to embodiments of this application may be directly performed and completed by a hardware processor, or may be performed and completed by using a combination of hardware in the processor and a software module.

In this embodiment of this application, the memory may be a nonvolatile memory, for example, a hard disk drive (hard disk drive, HDD) or a solid-state drive (solid-state drive, SSD), or may be a volatile memory (volatile memory), for example, a random-access memory (random-access memory, RAM). The memory is any other medium that can be configured to carry or store expected program code in a form of instructions or a data structure and that can be accessed by a computer, but is not limited thereto. The memory in this embodiment of this application may further be a circuit or any other apparatus that can implement a storage function, and is configured to store program instructions and/or data.

All or some of the methods in embodiments of this application may be implemented through software, hardware, firmware, or any combination thereof. When software is used to implement embodiments, embodiments may be implemented completely or partially in a form of a computer program product. The computer program product includes one or more computer instructions. When the computer program instructions are loaded and executed on a computer, all or some of the procedures or the functions according to embodiments of this application are generated. The computer may be a general-purpose computer, a special-purpose computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD for short)), a semiconductor medium (for example, an SSD), or the like.

It is clear that a person skilled in the art can make various modifications and variations to this application without departing from the scope of this application. In this way, this application is intended to cover these modifications and variations of this application provided that they fall within the scope of the claims of this application and their equivalent technologies.

## Claims

1. A peripheral component interconnect express PCIe-based data transmission method, wherein the method comprises:
obtaining, by a first node, a first transaction layer packet TLP, wherein the first TLP comprises a first TLP header and a first data payload, the first TLP header is used to indicate a data type of the first data payload, and the data type of the first data payload comprises one or more of audio, an image, control, data stream write SWRITE, or security; and
sending, by the first node, the first TLP.

2. The method according to claim 1, wherein the first TLP header is further used to indicate an attribute corresponding to the data type of the first data payload.

3. The method according to claim 2, wherein a first field in the first TLP header is used to indicate the data type of the first data payload, a second field in the first TLP header is used to indicate the attribute corresponding to the data type of the first data payload, and the first field is different from the second field.

4. The method according to claim 3, wherein the first field comprises the first three bits of the first TLP header, and the second field comprises at least one of the fourth bit to the eighth bit, the ninth bit, the 13^{th} bit, or M bits from the 33^{rd} bit to the last bit that are of the first TLP header; or
the first field comprises the first eight bits of the first TLP header, and the second field comprises at least one of the ninth bit, the 13^{th} bit, or M bits from the 33^{rd} bit to the last bit that are of the first TLP header; or
the first field comprises the first nine bits of the first TLP header, and the second field comprises at least one of the 13^{th} bit and M bits from the 33^{rd} bit to the last bit that are of the first TLP header; and
M is a positive integer greater than or equal to 1.

5. The method according to claim 2, wherein a first field in the first TLP header is used to indicate the data type of the first data payload and the attribute corresponding to the data type of the first data payload; and
the first field comprises at least one of the first eight bits, the ninth bit, the 13^{th} bit, or M bits from the 33^{rd} bit to the last bit that are of the first TLP header.

6. The method according to claim 4 or 5, wherein the first three bits of the first TLP header indicate reserved bit values of a Fmt field.

7. A peripheral component interconnect express PCIe-based data transmission method, wherein the method comprises:
receiving, by a switch, a first transaction layer packet TLP from a first node, wherein the first TLP comprises a first TLP header and a first data payload, the first TLP header is used to indicate a data type of the first data payload, and the data type of the first data payload comprises one or more of audio, an image, control, data stream write SWRITE, or security; and
sending, by the switch, a second TLP to a second node, wherein the second TLP comprises a second TLP header and the first data payload, and the second TLP header is used to indicate the data type of the first data payload.

8. The method according to claim 7, wherein the first TLP header is further used to indicate an attribute corresponding to the data type of the first data payload.

9. The method according to claim 8, wherein a first field in the first TLP header is used to indicate the data type of the first data payload, a second field in the first TLP header is used to indicate the attribute corresponding to the data type of the first data payload, and the first field is different from the second field.

10. The method according to claim 9, wherein the first field comprises the first three bits of the first TLP header, and the second field comprises at least one of the fourth bit to the eighth bit, the ninth bit, the 13^{th} bit, or M bits from the 33^{rd} bit to the last bit that are of the first TLP header; or
the first field comprises the first eight bits of the first TLP header, and the second field comprises at least one of the ninth bit, the 13^{th} bit, or M bits from the 33^{rd} bit to the last bit that are of the first TLP header; or
the first field comprises the first nine bits of the first TLP header, and the second field comprises at least one of the 13^{th} bit and M bits from the 33^{rd} bit to the last bit that are of the first TLP header; and
M is a positive integer greater than or equal to 1.

11. The method according to claim 8, wherein a first field in the first TLP header is used to indicate the data type of the first data payload and the attribute corresponding to the data type of the first data payload; and
the first field comprises at least one of the first eight bits, the ninth bit, the 13^{th} bit, or M bits from the 33^{rd} bit to the last bit that are of the first TLP header.

12. The method according to claim 10 or 11, wherein the first three bits of the first TLP header indicate reserved bit values of a Fmt field.

13. A peripheral component interconnect express PCIe-based data transmission method, wherein the method comprises:
receiving, by a second node, a first transaction layer packet TLP, wherein the first TLP comprises a first TLP header and a first data payload, and the first TLP header is used to indicate a data type of the first data payload; and
obtaining, by the second node based on the data type of the first data payload, the first data payload, wherein
the data type of the first data payload comprises one or more of audio, an image, control, data stream write SWRITE, or security.

14. The method according to claim 13, wherein the first TLP header is further used to indicate an attribute corresponding to the data type of the first data payload.

15. The method according to claim 14, wherein a first field in the first TLP header is used to indicate the data type of the first data payload, a second field in the first TLP header is used to indicate the attribute corresponding to the data type of the first data payload, and the first field is different from the second field.

16. The method according to claim 15, wherein the first field comprises the first three bits of the first TLP header, and the second field comprises at least one of the fourth bit to the eighth bit, the ninth bit, the 13^{th} bit, or M bits from the 33^{rd} bit to the last bit that are of the first TLP header; or
the first field comprises the first eight bits of the first TLP header, and the second field comprises at least one of the ninth bit, the 13^{th} bit, or M bits from the 33^{rd} bit to the last bit that are of the first TLP header; or
the first field comprises the first nine bits of the first TLP header, and the second field comprises at least one of the 13^{th} bit and M bits from the 33^{rd} bit to the last bit that are of the first TLP header; and
M is a positive integer greater than or equal to 1.

17. The method according to claim 14, wherein a first field in the first TLP header is used to indicate the data type of the first data payload and the attribute corresponding to the data type of the first data payload; and
the first field comprises at least one of the first eight bits, the ninth bit, the 13^{th} bit, or M bits from the 33^{rd} bit to the last bit that are of the first TLP.

18. The method according to claim 16 or 17, wherein the first three bits of the first TLP header indicate reserved bit values of a Fmt field.

19. A peripheral component interconnect express PCIe-based data transmission method, wherein the method comprises:
obtaining, by a first node, a first transaction layer packet TLP, wherein the first TLP comprises a first TLP header and a first data payload, the first TLP header is used to indicate a data type of the first data payload, and the data type of the first data payload comprises one or more of audio, an image, control, data stream write SWRITE, or security;
sending, by the first node, the first TLP;
receiving, by a switch, the first TLP, identifying that the first TLP header is used to indicate the data type of the first data payload, and sending a second TLP to a second node, wherein the second TLP comprises a second TLP header and the first data payload, and the second TLP header is used to indicate the data type of the first data payload; and
receiving, by the second node, the second TLP, and obtaining the first data payload based on the data type of the first data payload.

20. A communication apparatus, comprising a processing module and a communication module, wherein
the processing module is configured to obtain a first transaction layer packet TLP; and
the communication module is configured to send the first TLP, wherein
the first TLP comprises a first TLP header and a first data payload, the first TLP header is used to indicate a data type of the first data payload, and the data type of the first data payload comprises one or more of audio, an image, control, data stream write SWRITE, or security.

21. The communication apparatus according to claim 20, wherein the first TLP header is further used to indicate an attribute corresponding to the data type of the first data payload.

22. The communication apparatus according to claim 21, wherein a first field in the first TLP header is used to indicate the data type of the first data payload, a second field in the first TLP header is used to indicate the attribute corresponding to the data type of the first data payload, and the first field is different from the second field.

23. The communication apparatus according to claim 22, wherein the first field comprises the first three bits of the first TLP header, and the second field comprises at least one of the fourth bit to the eighth bit, the ninth bit, the 13^{th} bit, or M bits from the 33^{rd} bit to the last bit that are of the first TLP header; or
the first field comprises the first eight bits of the first TLP header, and the second field comprises at least one of the ninth bit, the 13^{th} bit, or M bits from the 33^{rd} bit to the last bit that are of the first TLP header; or
the first field comprises the first nine bits of the first TLP header, and the second field comprises at least one of the 13^{th} bit and M bits from the 33^{rd} bit to the last bit that are of the first TLP header; and
M is a positive integer greater than or equal to 1.

24. The communication apparatus according to claim 21, wherein a first field in the first TLP header is used to indicate the data type of the first data payload and the attribute corresponding to the data type of the first data payload; and
the first field comprises at least one of the first eight bits, the ninth bit, the 13^{th} bit, or M bits from the 33^{rd} bit to the last bit that are of the first TLP header.

25. The communication apparatus according to any one of claims 20 to 24, wherein the first three bits of the first TLP header indicate reserved bit values of a Fmt field.

26. A communication apparatus, comprising a processing module and a communication module, wherein
the communication module is configured to receive a first transaction layer packet TLP from a first node, wherein the first TLP comprises a first TLP header and a first data payload;
the processing module is configured to: identify whether the first TLP header is used to indicate a data type of the first data payload; and if the first TLP header is used to indicate the data type of the first data payload, trigger the communication module to send a second TLP to a second node, wherein the second TLP comprises a second TLP header and the first data payload, and the second TLP header is used to indicate the data type of the first data payload;
the communication module is further configured to send the second TLP to the second node; and
the data type of the first data payload comprises one or more of audio, an image, control, data stream write SWRITE, or security.

27. A communication apparatus, comprising a processing module and a communication module, wherein
the communication module is configured to receive a first transaction layer packet TLP, wherein the first TLP comprises a first TLP header and a first data payload, and the first TLP header is used to indicate a data type of the first data payload; and
the processing module is configured to obtain the first data payload based on the data type of the first data payload, wherein
the data type of the first data payload comprises one or more of audio, an image, control, data stream write SWRITE, or security.

28. A computer-readable storage medium, wherein the computer-readable storage medium stores program instructions, and when the program instructions are run on a computer, the computer is enabled to perform the method according to any one of claims 1 to 6, or the method according to any one of claims 7 to 12, or the method according to any one of claims 13 to 18.
